Europäisches Patentamt

European Patent Office

Office européen des brevets

(19)

(11) **EP 0 978 088 B1**

(12) **EUROPÄISCHE PATENTSCHRIFT**

(45) Veröffentlichungstag und Bekanntmachung des Hinweises auf die Patenterteilung:
 **28.11.2001 Patentblatt 2001/48**

(51) Int Cl.$^7$: **G06K 9/62**, G06K 9/66

(21) Anmeldenummer: **97927028.7**

(86) Internationale Anmeldenummer:
 **PCT/EP97/02649**

(22) Anmeldetag: **23.05.1997**

(87) Internationale Veröffentlichungsnummer:
 **WO 97/48069 (18.12.1997 Gazette 1997/54)**

(54) **VERFAHREN UND ANORDNUNG ZUR MUSTERERKENNUNG AUF STATISTISCHER BASIS**

METHOD AND ARRANGEMENT FOR PATTERN RECOGNITION ON THE BASIS OF STATISTICS

PROCEDE ET DISPOSITIF POUR LA RECONNAISSANCE DES FORMES SUR UNE BASE STATISTIQUE

(84) Benannte Vertragsstaaten:
 **BE DE FR**

(30) Priorität: **08.06.1996 DE 19623033**

(43) Veröffentlichungstag der Anmeldung:
 **09.02.2000 Patentblatt 2000/06**

(73) Patentinhaber: **Siemens Dematic AG
 90475 Nürnberg (DE)**

(72) Erfinder:
 • **BREUER, Thomas
  D-78467 Konstanz (DE)**
 • **HANISCH, Wilfried
  D-78315 Radolfzell (DE)**
 • **FRANKE, Jürgen
  D-89075 Ulm (DE)**

(74) Vertreter: **Zedlitz, Peter, Dipl.-Inf.
 Patentanwalt,
 Postfach 22 13 17
 80503 München (DE)**

(56) Entgegenhaltungen:
 • **J. SCHÜRMANN: "Zur Zeichen- und Worterkennung beim automatischen Anschriftlesen" WISSENSCHAFLICHE BERICHTE AEG TELEFUNKEN, Bd. 52, Nr. 1-2, 1979, Seiten 31-38, XP002041702**
 • **D F SPECHT: "Generation of polynomial discriminant functions for pattern recognition" IEEE TRANS. ON ELECTRONICS COMPUTERS, Bd. ec-16, Nr. 3, Juni 1967, Seiten 308-319, XP002029561**
 • **Wojciech W. Siedlecki: "A formula for multi-class distributed classifiers", Pattern Recognition Letters 15 (1994) pp. 739-742; Elsevier Science B.V.**

## Beschreibung

Die Mustererkennung gewinnt im Zeitalter der elektronischen Datenverarbeitung zunehmend an Bedeutung. Ihr Einsatzgebiet erstreckt sich von der Automatisierungstechnik bis zur maschinellen Bild - und Textverarbeitung, wo sie zur automatischen Briefverteilung (Adreßlesen) oder zur Auswertung von Formularen oder Dokumenten eingesetzt wird. Ziel der Mustererkennung ist es dabei, einer elektronisch vorverarbeiteten Bildinformation eine Kennung zuzuordnen, die mit hoher Zuverläßigkeit mit der wahren Bedeutung des Musters zusammenfällt. Statistisch basierte Mustererkennungsverfahren bewerten eine digitalisierte Bildinformation mit Schätzungen, aus denen sich der Grad der Zugehörigkeit des Musters zu einer Klasse von Mustern ablesen läßt. Bei $K$ gegebenen Zielklassen erhält im allgemeinen diejenige Klasse den Zuschlag, deren Schätzergebnis dem Maximum aus allen $K$ Schätzungen entspricht. Ein Erkennungssystem gilt als umso zuverlässiger, je öfter die als maximal geschätzte Zielklasse mit der wahren Zielklasse (Bedeutung) übereinstimmt. Ein bisher verwendeter Netzklassifikator, bestehend aus einem vollständigen Ensemble von Zweiklassen-Klassifikatoren, der $K$ Zielklassen zu entscheiden hat, entsteht dadurch, daß zu allen möglichen $K*$ $(K$-1)/2 Klassenpaaren je ein Zweiklassenklassifikator berechnet wird. Im Lesebetrieb gibt bei vorliegendem Muster jeder der Zweiklassenklassifikatoren eine Schätzung der Zugehörigkeit des Musters zu einer der beiden zugrunde liegenden Zielklassen ab. Es entstehen $K*(K$ - 1)/2 Schätzungen, die untereinander nicht unabhängig sind. Aus diesen $K*(K$ - 1)/2 Schätzungen sollen nun $K$ Schätzungen gebildet werden, für jede Zielklasse eine. Die Theorie gibt für diesen Zusammenhang eine mathematische Regel an, die in Wojciech W. Siedlecki , "A formula for multiclass distributed classifiers," Pattern Recognition Letters 15 (1994), Elsevier Science B.V. beschrieben ist. Die Praxis der Klassifikatoren zeigt nun, daß die Anwendbarkeit dieser Regel nur unzureichend erfüllt ist, da die Zweiklassenklassifikatoren keine statistischen Rückschlußwahrscheinlichkeiten liefern, sobald sie ein Fremdmuster, welches nicht zu ihrem adaptierten Klassenbereich gehört, schätzen. Für die Praxis bedeutet dies, daß Abschaltmechanismen diejenigen Klassifikatoren, die für das Muster nicht zuständig sind, möglichst frühzeitig deaktivieren müssen. Die bisher in der Praxis verwendeten Abschaltregeln sind weitgehend heuristischer Prägung. Dadurch fließt in die Bearbeitung von Netzklassifikatoren ein statistisch nicht kontrolliertes Element von Willkür ein. Durch diese regelbasierte Abarbeitung von Größen, die einem messbaren statistischen Verhalten unterliegen, verschlechtern sich die Erkennungsergebnisse wesentlich. Regelbasierte Abarbeitung von Netzklassifikatoren verhindert ferner die Möglichkeit, bei veränderten Stichproben das Klassifikatorsystem effektiv nachzutrainieren. Bei 30 oder mehr zu entscheidenden Klassen steht zudem der Einsatz von Netzklassifikatoren vor prinzipiellen Problemen:

1. Die Anzahl zu speichernder Komponenten (Paarklassifikatoren) wächst quadratisch mit der Klassenanzahl ($K$ $*$ ($K$ - 1)/2).

2. Eine Bewertung und Zusammenfassung der komponentbezogenen Schätzungen zu einer zuverlässigen Gesamtschätzung wird mit wachsender Klassenzahl immer unsicherer.

3. Anpassungen eines Netzklassifikators an landesspezifische Schreibstile verursachen im Adaptionsbetrieb erhebliche Kosten.

Der im Anspruch 1 und 8 angegebenen Erfindung liegt das Problem zugrunde, ein Mustererkennungsverfahren auf statistischer Basis und eine Anordnung zur Realisierung des Verfahrens zu schaffen, das unter Vermeidung der geschilderten Schwierigkeiten des Standes der Technik bei hoher Klassenzahl und vertretbaren Kosten allgemeine Erkennungsaufgaben echtzeitfähig löst, wobei eine regelbasierte Abarbeitung von Netzklassifikatoren vermieden wird. Die mit der Erfindung erzielten Vorteile bestehen insbesondere darin, daß durch Vermeidung heuristischer Abschaltregeln die Erkennungszuverlässigkeit erheblich gesteigert wird. Nach der Auswahl der Zwei- oder Mehrklassenklassifikatoren und der Erzeugung des Bewertungsklassifikators ist die gesamte Statistik der Anwendung in der dem Bewertungsklassifikator zugrunde gelegten Momentenmatrix repräsentiert. Da nur die reduzierte Sequenz der Zwei- oder Mehrklassenklassifikatoren im Verbund mit dem Bewertungsklassifikator abgespeichert werden muß, wird eine sehr ökonomische Speicherauslastung erreicht. Da Polynomklassifikatoren alle Operationen im Anschluß an die Bildmerkmalsaufbereitung mittels Addition, Multiplikation und Anordnen von natürlichen Zahlen bewältigen, entfallen komplexere Rechnungen wie Fließkommasimulation auf der Zielhardware vollständig. Auch auf das Mitführen speicheraufwendiger Tabellenwerke wird verzichtet. Diese Umstände erlauben es, beim Design der Zielhardware alles Gewicht auf Optimierung der Laufzeit zu legen. Vorteilhafte Ausgestaltungen der Erfindung sind in den Unteransprüchen angegeben. So wird in der Ausgestaltung nach Patentanspruch 2 als skalares Trennmaß (Klassifikationsmaß) die Summe der Fehlerquadrate im Entscheidungsraum gewählt. Der Vorteil besteht hierbei darin, daß sich im Verlauf der linearen Regression, die mit der Berechnung des linearen Klassifikators einhergeht, explizit eine Rangordnung nach Maßgabe des Beitrages zu Minimierung des Restfehlers unter den Komponenten aufbaut. Diese Rangordnung wird benutzt, um eine Auswahl aus den verfügbaren Zwei- oder Mehrklassenklassifikatoren zu treffen, die als Ergebnis das reduzierte Set der Paarklassifikatoren bildet. Das Verfahren zur Minimierung des Restfehlers ist detailliert in Schürmann, Statistischer Polynomklassifikator, R.Oldenburg Verlag ,1977 beschrieben.

Die Ausgestaltung nach Patentanspruch 3 verwendet als skalares Trennmaß die Entropie im Verteilungsraum der Schätzvektoren. Zur Auswertung der Entropie ist dabei die Auftretenshäufigkeit jedes Zustandes aller Paarklassifikatorschätzungen über die Menge aller Zustände zu ermitteln. Dann wird jenes Teilsystem bestimmt, das die geringste Entropie produziert. In der Ausbildung nach Patentanspruch 4 wird eine größere Zielklassenmenge in mehrere Zielklassenmengen aufgeteilt, für die dann jeweils eine Auswahl der Zwei- oder Mehrklassenklassifikatoren und daraus der Bewertungsklassifikator erzeugt wird. Aus den Ergebnissen der Bewertungsklassifikatoren wird dann eine resultierende Gesamtschätzung ermittelt. Die resultierende Gesamtschätzung kann dann auf verschiedene Arten berechnet werden:

1. Bei der Ausgestaltung nach Patentanspruch 5 wird aus den Ergebnisvektoren der Bewertungsklassifikatoren ein kartesisch erweiterter Produktvektor gebildet, aus dem dann ein die Gesamtschätzung ermittelnder, resultierender quadratischer Bewertungsklassifikator gebildet wird,

2. In der Ausgestaltung nach Patentanspruch 6 wird ebenfalls ein kartesischer Produktvektor gebildet. Dieser wird mittels einer Unterraumtransformation $U$ in einen verkürzten Vektor überführt, von dem nur die wichtigsten Komponenten entsprechend der Eigenwertverteilung der Transformationsmatrix $U$ zur Adaption eines quadratischen Klassifikators verwendet werden. Dieser quadratische Klassifikator bildet dann den transformierten und reduzierten Vektor zu einem Schätzvektor auf die Zielklasse ab.

3. In der Auskleidung gemäß Patentanspruch 7 erzeugt ein Metaklassenklassifikator, der über Gruppen von Klassenmengen trainiert wird, vor Aktivierung der jeweiligen Auswahl der Zwei- oder Mehrklassenklassifikatoren Schätzungen über die Gruppen. Danach werden diejenigen Zwei- oder Mehrklassenklassifikatoren für die Zeichen der Gruppen, deren Schätzwert über einer festgelegten Schwelle liegt, aktiviert. Zur Ermittlung der Gesamtschätzung werden dann die Gruppenschätzungen mit den Schätzungen der jeweiligen zugehörigen Zeichenbewertungs-Klassifikatoren für die Zeichenzielklassen nach einer einheitlichen Regel so verknüpft, daß die Summe über alle so erhaltenen Zeichenschätzungen eine auf 1 normierbare Zahl ergibt. Die 1. Variante liefert die genauesten Resultate bei größten rechentechnischem Aufwand, während die 2. und 3. Variante zur Reduktion des rechentechnischen Aufwandes beitragen.

Die Umsetzung der Erfindung kann in 5 Phasen unterteilt werden. Jede Phase der Erfindung wird im folgenden Ausführungsteil unter Bezugnahme auf je eine Figur näher erläutert.
Dabei zeigen

Fig. 1   den Ablauf bei der Erzeugung eines vollständigen Satzes von Paarklassifikatoren eines Netzklassifikators.

Fig. 2   den Ablauf bei der Erzeugung eines reduzierten Satzes von Paarklassifikatoren.

Fig. 3   den Ablauf bei der Erzeugung eines Bewertungsklassifikators.

Fig. 4   den Ablauf der Musterkennung in einer erfindungsgemäßen Anordnung.

Fig. 5   den Ablauf bei der Musterkennung mit einer großen Klassenzahl unter Verwendung eines Metaklassenklassifikators.

Die Erfindung wird im folgenden anhand von Ensembles von Zwei-Klassenklassifikatoren (Paarklassifikatoren) erläutert, ist aber auf diese Einschränkung prinzipiell nicht beschränkt.

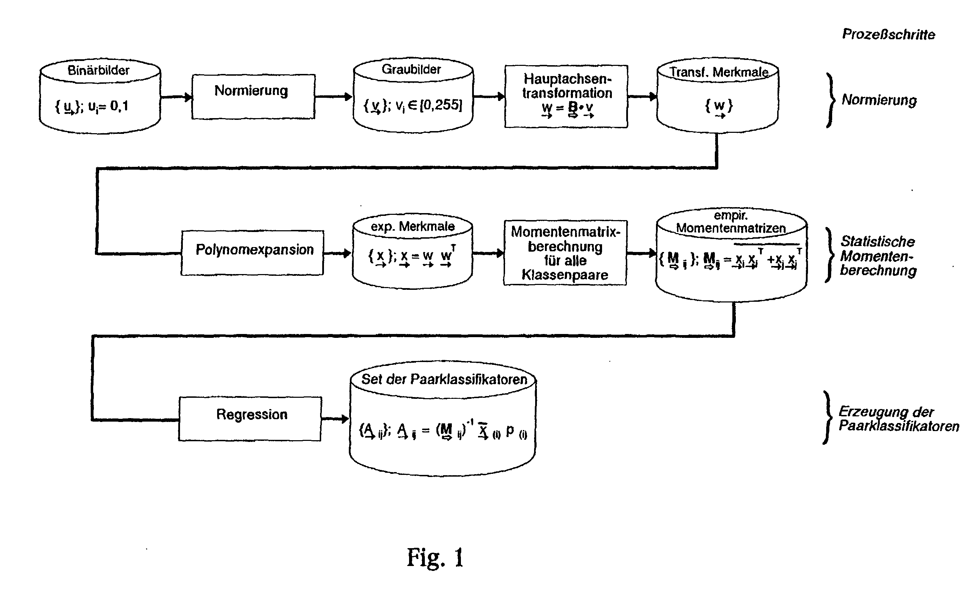

- Erzeugung eines Netzklassifikators :
  Nach Fig.1 startet dieser Prozeßschritt mit den Binärbildern. Zu jedem Bild aus der Lernstichprobe liegt dann ein binarisierter Bildvektor $\vec{u}$ vor. Im Prinzip sind die schwarzen Pixel des Bildes mit 1 repräsentiert , während die weißen Pixel mit 0 codiert sind. Zusätzlich ist zu jedem Muster eine vom Menschen vergebene Referenzkennung erstellt, die die Bedeutung des Musters eindeutig erfaßt. Die Normierung transformiert nun auf Basis von Messungen der lokalen und globalen Pixelproportionen das Binärbild in ein Graubild. Dabei ensteht der Merkmalsvektor $\vec{v}$, der 256 Komponenten aufweist, wobei jede Komponente Grauwerte aus dem Skalierungsbereich [0,255] enthält. Die Vektoren $\vec{v}$ werden einer Hauptachsentransformation mit der Matrix $\vec{\vec{B}}$ unterzogen. Das Resultat dieser Matrix-Vektormultiplikation ist der Bildvektor $\vec{w}$. Der Bildvektor $\vec{w}$ wird nun mittels Polynomexpansion nach einer festen Abbildungsvorschrift zum Vektor $\overset{\cdot}{x}$ expandiert. Für einen 2-dimensionalen W-Vektor ($\omega$1, $\omega$2) wird zum Beispiel mit der Verknüpfungsvorschrift :

*PSL*1 = *LIN*1, 2*QU AD*11, 12,22

der folgende x-Vektor erzeugt :

$\overset{\cdot}{x}$ = (1, *w*1, *w*2, *w*1 ∗ *w*1, *w*1 ∗ *w*2, *w*2 ∗ *w*2)

Die 1.Komponente ist immer mit 1 vorbelegt, damit die später erzeugten Schätzwerte in der Summe auf 1 normierbar werden. Über die Menge der polynomial erweiterten Vektoren {$\overset{\cdot}{x}$} werden dann empirische Momentenmatrizen $\vec{M}_{ij}$ nach Formel(2) für jedes Paar (*i,j*) von Klassen erzeugt. Die Klasse *i* enthält dabei nur Zeichen, die der Mensch als zur Klasse i gehörig referenziert hat. Jede Momentenmatrix wird nach der in Schürmann J., Polynomklassifikatoren für die Zeichenerkennung, beschriebenen Methode einer Regression unterzogen. Nach der Formel(1) ergeben sich dann zu jedem Klassenpaar (*i,j*) die Klassifikatoren $\vec{A}_{ij}$. Als Netzklassifikator ist damit ein Ensemble von *K* ∗ (*K* - 1)/2 Paarklassifikatoren entstanden.Jeder dieser Paarklassifikatoren (Zwei- Klassen-Entscheider) ist so über entsprechende Musterdaten trainiert, daß er genau 2 aus den *K* zur Disposition stehenden Zielklassen erkennt. Es gelten folgende Zusammenhänge :

$$A(i,j)[k] \quad = \quad \sum_l M^{-1}(i,j)[k,l] * \bar{x}(i)[l] * p(i) \qquad\qquad (1)$$

*mit*

$$M(i,j)[k,l] \quad = \quad \frac{1}{z(i,j)} \sum_{\{(i,j)\}} x(z)_k x(z)_l \qquad\qquad (2)$$

$$- \quad (empirische\ Momentenmatrix\ 2.Ordnung)$$

$$z(i,j) \quad - \quad Anzahl\ Zeichen\ der\ Klassen\ (i,j)$$

,wobei $\bar{x}(i)[l]$ der Mittelwertvektor zum Merkmalsvektor $\overset{\cdot}{x}$(i) in Komponentendarstellung ist und *p*(i) die Auftretenshäufigkeit der Klasse i ist. Bei vorliegendem Merkmalsvektor $\overset{\cdot}{x}$ schätzt der Klassifikator *A*(*i,j*) den Wert *d*(*i,j*) auf die Klasse *i* , wobei gilt

$$d(i,j) = \sum_l A(i,j)[l] * x[l] \qquad\qquad (3)$$

Die Klassifikatorkoeffizienten *A*(*i,j*)[*l*] sind dabei so eingestellt, daß immer gilt :

$$d(i,j) + d(j,i) = 1. \qquad\qquad (4)$$

- Reduzierung der Anzahl der Paarklassifikatoren:

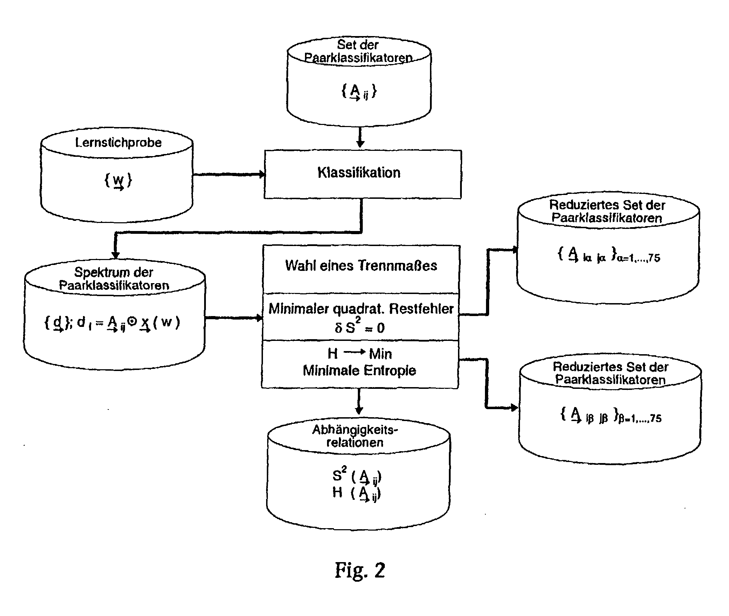

  Dieser Prozeßschritt ist in Fig.2 schematisiert. Nach Erzeugung eines Netzklassifikators wird dessen Schätzvektorspektrum {*d*(*i,j*)} über eine klassenweise annähernd gleichverteilte Lernstichprobe , in der alle zu erkennenden Klassenmuster genügend stark vertreten sind, aufgenommen. Die Klassifikation erzeugt dabei aus den hauptachsentransformierten Bildvektoren w zunächst polynomial erweiterte Vektoren $\overset{\cdot}{x}(\vec{w})$. Das Spektrum der Paarklassifikatoren ist die Menge aller d-Vektoren {$\vec{d}$}, die durch Klassifikation der Lernstichprobe mit allen Paarklassifikatoren entsteht. Ein einzelner d-Vektor entsteht dadurch , daß zu einem erweiterten Bildvektor $\overset{\cdot}{x}$ eines Zeichens der Lernstichprobe für jeden Paarklassifikator $\vec{A}_{ij}$ je ein Skalarprodukt mit dem Vektor $\overset{\cdot}{x}$ durchgeführt wird und die Ergebnisse der Skalarprodukte dann in der Reihenfolge der Paarklassifikatoren in den Vektor $\vec{d}$ eingetragen werden. Im folgenden wird über statistische Operationen auf der Merkmalsmenge {*d*(*i,j*)} dasjenige Teilsystem von Paarklassifikatoren {$\vec{A}$(*i*$_\alpha$*j*$_\alpha$)} ermittelt ,das als Zielvorgabe ein sklares Maß, das hohe Trennrelevanz besitzt, minimiert. Beispielhaft wird das Reduktionsverfahren anhand der folgenden beiden skalaren Klassifikationsmaße erläutert:

- Summe der Fehlerquadrate $S^2$ im $D(I)$ Entscheidungsraum

$$S^2 \;=\; \frac{1}{N} \sum_{\{z\}} \sum_{I=1}^{K} (D_I - Y_I)^2 \tag{5}$$

*wobei gilt*

$$\exists A_{I,j,k}^{Lin}, \; D_I \;=\; \sum_{j=1}^{K-1} \sum_{k=j+1}^{K} A_{I,j,k}^{Lin} * d(j,k) \tag{6}$$

$$D_I \;-\; Schätzung\ des\ Klassifikators\ auf\ Klasse\ I$$

$$Y_I \;=\; \begin{cases} 1 & \text{falls } z \in \{I\} \\ 0 & \text{sonst} \end{cases}$$

Der Klassifikator $A^{Lin}$ wird dabei nach der Gleichung (1) erzeugt. Er ist deshalb linear, da zur Berechnung der Momentenmatrix nach Gleichung(2) als x-Vektor der um 1 an der 1.Stelle expandierte lineare d-Vektor $\vec{d}$ eingeht, der aus den geordneten Paarschätzungen $d(i,j)$ aufgebaut ist. Diese Variante bietet den Vorteil, daß sich im Verlauf der linearen Regression, die mit der Berechnung des linearen Klassifikators $\vec{A}_{I,j,k}^{Lin}$ einhergeht, explizit eine Rangordnung nach Maßgabe des Beitrages zur Minimierung des Restfehlers unter den Komponenten $d(i,j)$ aufbaut. Diese Rangordnung wird benutzt, um eine Auswahl aus den $K * (K - 1)/2$ verfügbaren Paarklassifikatoren zu treffen, die als Ergebnis dann das reduzierte Set der Paarklassifikatoren bilden. Auf das Verfahren zur (sukzessiven) Minimierung des Restfehlers braucht hier nicht näher eingegangen zu werden . Es ist detailliert in

Schürmann J. , Polynomklassifikatoren für die Zeichenerkennung, Kapitel 7 beschrieben. Bei der Auswahl beschränkt man sich derzeit auf die 75 nach der Rangordnung wichtigsten Komponenten. Diese Beschränkung hängt von der Hauptspeicherkapazität der zur Adaption verwendeten Rechenmaschine ab und stellt somit keine prinzipielle Beschränkung dar. Das Ergebnis der linearen Regression über die Merkmalsmenge $\{d(i,j)\}$ ist somit eine geordnete Menge $\{A(i_\alpha j_\alpha)\}_{\alpha=1,\dots,75}$ von Paarklassifikatoren , die mit wachsendem Index $\alpha$ einen fallenden relativen Beitrag zur Minderung des quadratischen Restfehlers liefern. Im weiteren Adaptionsverlauf wird nur noch diese ausgewählte Menge an Paarklassifikatoren weiter verwendet.

- Entropie im $d(i,j)$ Verteilungsraum

Zur Bildung der Entropie $H$ des unstrukturierten Ensembles der Zwei-Klassen-Entscheider ist es notwendig, die folgenden Ausdrücke zu berechnen :

$$H \;=\; \sum_{\{i,j\}} H_{i,j} \tag{7}$$

$$H_{i,j} \;=\; -\sum_{I} \sum_{\{d(ij)\}} p(I|d(i,j)) * \log_2 p(I|d(i,j)) * p(d(i,j)) \tag{8}$$

Der Ausdruck $p(I|d(i,j))$ ist per definitionem die Bayes'sche Rückschlußwahrscheinlichkeit dafür, daß der Klassifikator $A(i,j)$ bei gegebener Schätzung $d(i,j)$ ein Muster der Klasse $I$ klassifiziert hat. Unter Verwendung der Bayes'schen Formel:

$$p(I|\alpha) = \frac{p(\alpha|I) * p(I)}{\sum_{J=1}^{K} p(\alpha|J) * p(J)} \tag{9}$$

und der folgenden Definition :

$N_{i,j,\alpha,J}$ := *Anzahl Zeichen der Klasse J, für die gilt :*

$$UR + (OR - UR)/MAX * (\alpha - 1) \leq d(i,j) < UR + (OR - UR)/MAX * \alpha \tag{10}$$

$$\alpha = 1 ,..., MAX \tag{11}$$

wird es möglich, die Entropie *H* durch eine empirische Entropie *H\** beliebig genau zu approximieren. Die Parameter:

$UR$ :=     *Untere Schätzschwelle*
$OR$ :=     *Obere Schätzschwelle*
$MAX$ :=    *Anzahl Histogrammfächer*

werden auf Basis des Schätzvektorspektrums festgelegt. Es werden dann die Größen $N_{i,j,\alpha,J}$ über die Lernstichprobe von Mustern ausgezählt. Nach Ermittelung der $N_{i,j,\alpha,J}$ sind die folgenden Größen errechenbar:

$$H^* = \sum_{\{i,j\}} H_{i,j}^* \tag{12}$$

$$H_{i,j}^* = \frac{-1}{N} \sum_{\alpha=1}^{MAX} \sum_{I=1}^{K} N_{i,j,\alpha,I} * log_2 \frac{N_{i,j,\alpha,I}}{\sum_{J=1}^{J=K} N_{i,j,\alpha,J}} \tag{13}$$

$$V_{i,j}^*[I][\alpha] := \begin{cases} -N_{i,j,\alpha,I} * \frac{log_2 N_{i,j,\alpha,I}}{\sum_{J=1}^{K} N_{i,j,\alpha,J}} & ; 1 \leq \alpha \leq MAX \\ 0 & ; \text{sonst} \end{cases} \tag{14}$$

$$DOT(i,j;k,l) := \sum_{J=1}^{K} \sum_{\alpha=1}^{MAX} V_{i,j}^*[J][\alpha] * V_{k,l}^*[J][\alpha] \tag{15}$$

$$COS(i,j;k,l) := \frac{DOT(i,j;k,l)}{\sqrt{DOT(i,j;i,j) * DOT(k,l;k,l)}} \tag{16}$$

$$ANG(i,j;k,l) = \arccos COS(i,j;k,l) \tag{17}$$

$$-MAX \leq \beta \leq + MAX \tag{18}$$

$$COR^+(i,j;k,l) \;\; := \;\; \max_{\beta} \frac{\sum_{J=1}^{K} \sum_{\alpha=1}^{MAX} V_{i,j}^*[J][\alpha] * V_{k,l}^*[J][\alpha - \beta]}{\sqrt{DOT(i,j;i,j) * DOT(k,l;k,l)}} \tag{19}$$

$$COR^-(i,j;k,l) \;\; := \;\; \max_{\beta} \frac{\sum_{J=1}^{K} \sum_{\alpha=1}^{MAX} V_{i,j}^*[J][\alpha] * V_{k,l}^*[J][MAX - \alpha - \beta]}{\sqrt{DOT(i,j;i,j) * DOT(k,l;k,l)}} \tag{20}$$

$$COR(i,j;k,l) := max\{COR^+(i,j;k,l);COR^-(i,j;k,l)\} \tag{21}$$

Nach Durchführung der Berechnung sind alle mit der Entropie verbundenen statistischen Größen ermittelt. Es ist nun jenes Teilsystem zu bestimmen, das

1. in der Summe seiner Einzelentropien eine minimale Gesamtentropie produziert und
2. dessen Komponenten untereinander statistisch möglichst geringe Korrelationen aufweisen.

Beiden Forderungen wird durch Befolgung der folgenden Auswahlkriterien Rechnung getragen :

1. Entropie-Rangordnung:
   Lege die bis auf Klassifikatoren gleicher Entropie eindeutige Folge $A(i_\alpha, j_\alpha)$ fest mit :

$$H^*_{i_1,j_1} \leq H^*_{i_2,j_2} \leq ... \leq H^*_{i_n,j_n} \tag{22}$$

2. Induktionsanfang :
   Wähle $A(\bar{i}_1,\bar{j}_1) := A(i_1,j_1)$ als Startkandidat. Dies ist der Klassifikator minimaler Entropie.
3. Induktionsschluß von $k$ auf $k + 1$ :
   Es seien $k$ Kandidaten $A(\bar{i}_1,\bar{j}_1),..., A(\bar{i}_k,\bar{j}_k)$ ausgewählt, wobei

$$H^*_{\bar{i}_1,\bar{j}_1} \leq H^*_{\bar{i}_2,\bar{j}_2} \leq ... \leq H^*_{\bar{i}_k,\bar{j}_k} := H^*_{i_m,j_m} \tag{23}$$

und

$$\exists A(i_m,j_m), \; A(i_m,j_m) = A(\bar{i}_k,\bar{j}_k) \; ; \; k \leq m < n \tag{24}$$

und

$$ANG(\bar{i}_\alpha,\bar{j}_\alpha;\bar{i}_\beta,\bar{j}_\beta) > \Theta_{crit} \; ; \; 1 \leq \alpha < \beta \leq k \tag{25}$$

Bestimme ein kleinstes $l$ mit

$$l = 1, ..., n - m \tag{26}$$

, so daß gilt:

$$ANG(\bar{i}_\alpha,\bar{j}_\alpha;i_{m+l},j_{m+l}) > \Theta_{crit} \; ; \; \alpha = 1, ..., k \tag{27}$$

Falls $l$ existiert, wähle :

$$A(\bar{i}_{k+1},\bar{j}_{k+1}) := A(i_{m+l},j_{m+l}) \tag{28}$$

andernfalls terminiere mit $k$ Kandidaten.

Der freie Winkelparameter $\Theta_{crit}$ kann durch Gradientenverfahren so eingestellt werden, daß eine definierte Anzahl von ausgewählten Komponenten entsteht. Eine Verfeinerung des Auswahlkriteriums wird durch Minimierung des Korrelationskoeffizienten $COR(i,j;k,l)$ erreicht. Die Filterbedingung(25) lautet in diesem Falle:

$$COR(\bar{i}_\alpha,\bar{j}_\alpha;\bar{i}_\beta,\bar{j}_\beta) < \chi_{crit} \; ; 1 \leq \alpha < \beta \leq k \tag{29}$$

Der maximal zugelassene Korrelationskoeffizient zwischen je 2 Paarklassifikatoren ist damit durch $\chi_{crit}$ limitiert. Der Korrelationskoeffizient erfüllt ferner die Symmetriebedingungen:

$$COR(i,j;k,l) = COR(j,i;k,l) \tag{30}$$

$$COR(i,j;k,l) = COR(i,j;l,k) \tag{31}$$

$$COR(i,j;k,l) = COR(k,l;i,j) \tag{32}$$

Die Methode ist für obengenannte Klassifikationsmaße ausgeführt , ist aber darauf prinzipiell nicht beschränkt. Die Unteransprüche des Patents beziehen sich auch auf Ausprägungen der Methode, die auf anderen Klassifikationsmaßen beruhen

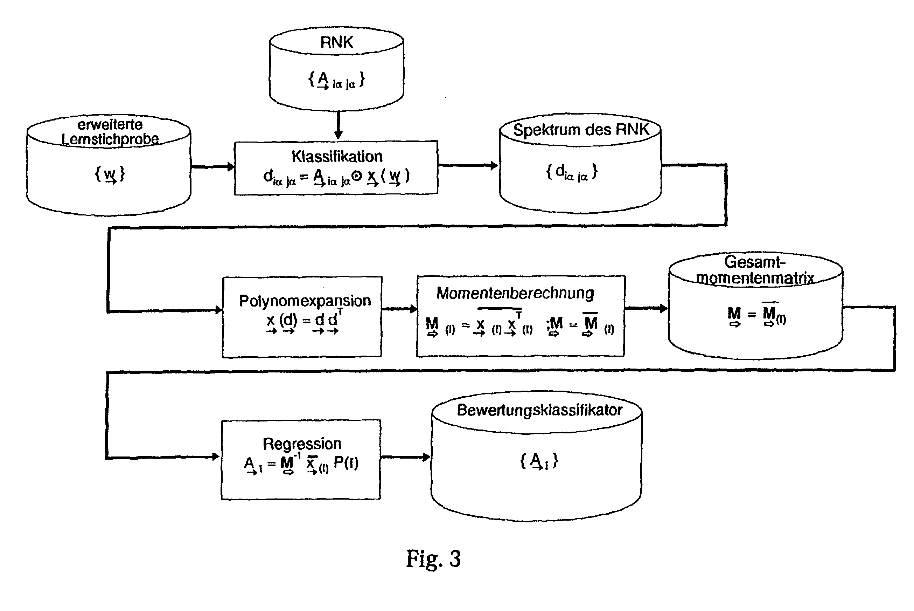

- Erzeugung eines Bewertungsklassifikators :
  Dieser Prozeßschritt ist in Fig.3 einzusehen. Nach Erzeugung der reduzierten Sequenz von Paarklassifiktoren $\{\bar{A}_{i_\alpha j_\alpha}\}$, die in der Fig.3 als (RNK) bezeichnet werden, werden diese über eine erweiterte Lernstichprobe, die mindestens 9000 Muster pro Entscheidungsklasse beinhaltet, zur Berechnung von Schätzvektoren verwendet. Es entsteht die Merkmalsmenge $\{d(i_\alpha j_\alpha)\}$, die aus einzelnen Vektoren der Dimension 75 bestehen, wobei für jedes Muster die Zielkennung ( Bedeutung des Musters ) synchron aus der Bildmerkmalsmenge eingetragen ist. Über jeden Merkmalsvektor erfolgt eine quadratische Erweiterung zu einem polynomial verknüpften Vektor $\vec{x}$. Es wird dann auf Basis der Vektoren $\vec{x}$ zu jeder Klasse $l$ eine Momentenmatrix $\vec{\bar{M}}_{(l)}$ erzeugt. Die Gesamtmomentenmatrix $\vec{\bar{M}}$ wird durch gewogene Mittelung über alle klassenweisen Momentenmatrizen $\vec{\bar{M}}_{(l)}$ erzeugt. Die Regression erzeugt dann die klassenweisen Bewertungsklassifikatoren nach der folgenden Formel :

$$\vec{A}_{(I)} = \vec{\bar{M}}^{-1} * \vec{\bar{x}}_{(I)} * P(I) \tag{33}$$

wobei $P(I)$ die Auftretenshäufigkeit der Klasse $l$ ist. Damit ist ohne weitere Hypothesen über den Zusammenhang zwischen Paarklassifikatorschätzungen und Gesamtschätzung für die einzelnen Klassen ein Instrument geschaffen, das diesen Zusammenhang aus der approximativen statistischen Verteilung im $d(i,j)$ -Raum errechnet. Die rechnerische Approximation an den optimalen Zusammenhang zwischen Paarschätzungen und Gesamtschätzung ist umso besser, je genereller die zugrunde gelegte Lernstichprobe ist. Die Erfolge der Methode zeigen insbesondere, daß das Maß an Willkür bei der Auswahl geeigneter Lernstichproben begrenzter ist als jenes Maß an Willkür, das bei der Konstruktion eines hypothetischen mathematischen Zusammenhangs gegeben ist. Mit der Erzeugung eines reduzierten Sets von Paarklassifikatoren und dem an dieses gekoppelten Bewertungsklassifiktors ist die Adaptionsphase abgeschlossen.Die gesamte Statistik der Anwendung ist nun in der dem Bewertungsklassifikator zugrunde gelegten Momentenmatrix repräsentiert. Diese Momentenmatrix wird für folgende Adaptionsvorgänge im Archiv verwaltet. Zur Integration ins Produkt gelangen lediglich die reduzierte Sequenz der Paarklassifikatoren im Verbund mit einem passenden Bewertungsklassifikator. Das Verfahren erlaubt damit die Erzeugung extrem verdichteter Informationseinheiten (Momentenmatrizen) , die eine gegebene Anwendung der Mustererkennung repräsentieren und als Startobjekte für künftige Iterationen (landesspezifische Anpassungen) verwendbar sind.

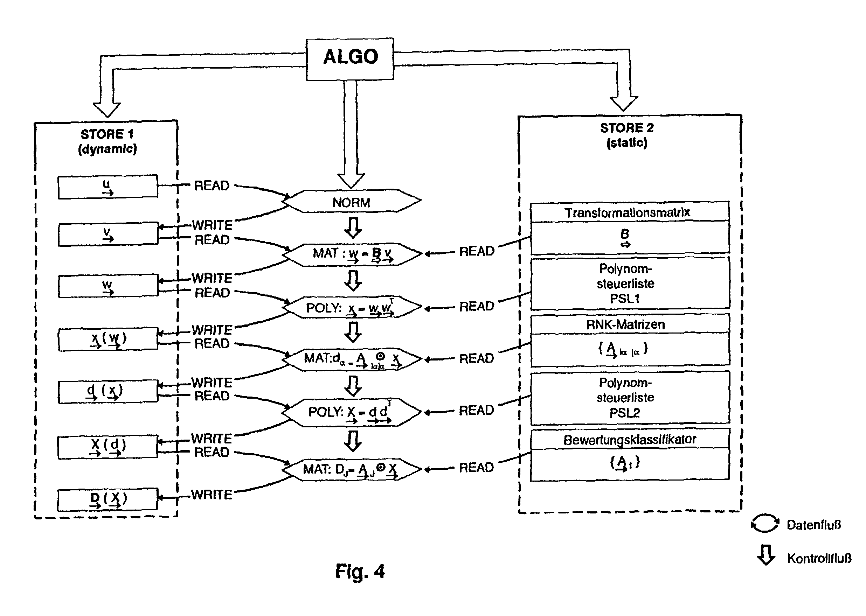

- Einsatz des erfindungsgemäßen Verfahrens in einer entsprechenden Anordnung:
  Dieser Prozeßschritt ist in Fig.4 schematisiert. Das Verfahren stellt zur Anwendung in einem Echtzeitsystem die geordnete reduzierte Sequenz der Paarklassifikatoren und einen für die jeweilige Anwendung passenden Bewertungsklassifikator zur Verfügung. Bei unzureichender Kenntnis, welcher Bewertungsklassifikator die auf die Anwendung besten Ergebnisse liefert, kann das Angebot erhöht werden und ein Lesetest erweist den optimalen Bewertungsklassifikator. Die Minimalanforderung an eine Zielhardware bedingt das Vorhandensein der folgenden Komponenten:

  1. NORM : Ein Modul, welches die binarisierten Merkmalsvektoren mit den dem Stand der Technik gemäßen Normierverfahren transformiert und in einen Eingangsvektor konstanter Länge (v-Vektor) ablegt.

  2. POLY : Ein Modul, welches nach einer festen Abbildungsvorschrift einen normierten w-Vektor in einen polynomial erweiterten x-Vektor transformiert, der als Eingangsvektor zur Klassifikation dient.

  3. MAT : Ein Matrixmultiplizierwerk, welches über externe Mikroprogramme gesteuert, Skalarprodukte zwischen Integervektoren berechnet.

  4. STORE: Ein Speicher zur Ablage von Zwischenwerten und zum Adressieren der Klassifikatorkoeffizienten.

  5. ALGO : Ein Befehlregister zum Ablegen von Steuerbefehlen bzw. ausführbaren Maschinecodes.

Der Speicher wird in eine Einheit STORE1 zum Ablegen und Lesen von Zwischenergebnissen und in eine Einheit STORE2 zum Lesen unveränderlicher Werte partitioniert.
Für das beschriebene Verfahren sind dann die in Fig.4 aufgeführten Operationen nötig. Dabei werden gesteuert vom Befehlsregister ALGO nacheinander die folgenden Schritte ausgeführt:

1. Der Erkennungsprozess startet mit dem Lesen des Pixelbildes. Nach Abtastung des Musters liegt dieses als binärer Bildvektor $\vec{u}$ in STORE1. Im Prinzip entspricht der binären 1 ein Schwarzpixel und der 0 ein Weisspixel. NORM gruppiert nun die binären Bildelemente auf Basis von Messungen der spalten -und zeilenbezogenen Pixeldichten so um, daß als Resultat ein Graubildvektor $\vec{v}$ entsteht, der einer 16x16 Bildmatrix entspricht. Jedes Element des Graubildes ist in 256 Graustufen skaliert. NORM schreibt den Vektor $\vec{v}$ in STORE1.

2. Das Modul MAT liest $\vec{v}$ aus STORE1 ein sowie aus STORE2 die Hauptachsentransformationsmatrix $\vec{B}$. Diese ist aus der Adaptionsphase durch Ausführung einer Standard-Hauptachsentransformation über die Merkmalsmenge $\{\vec{v}\}$ verfügbar. Es wird eine Matrix-Vektor-Multiplikation durchgeführt. Das Ergebnis ist der transformierte Bildvektor $\vec{w}$, der in STORE1 gespeichert wird.

3. Das Modul POLY liest den Vektor $\vec{w}$ aus STORE1 und eine Liste PSL1 aus STORE2. PSL1 enthält die Steuerinformation , wie die Komponenten des Vektors $\vec{w}$ zu verknüpfen sind. Der x-Vektor wird in STORE1 gespeichert.

4. Das Modul MAT liest den x-Vektor aus STORE1 und die Matrixelemente des RNK, die klassenweise als Vektoren $\vec{A}(i_\alpha j_\alpha)$ abgelegt sind. MAT bildet nun für jeden A-Vektor ein Skalarprodukt mit dem x-Vektor. Es entstehen so viele Skalarprodukte wie A-Vektoren vorhanden sind. Die Skalarprodukte werden in der Reihenfolge der A-Vektoren in den d-Vektor überführt. Diesen speichert MAT in STORE1.

5. Das Modul POLY liest den d-Vektor aus STORE1 und die PSL2 aus STORE2. POLY baut jetzt den X-Vektor auf, indem es PSL2 auf den d-Vektor anwendet und speichert den X-Vektor in STORE1.

6. Der X-Vektor wird vom Modul MAT aus STORE1 gelesen, während MAT diesmal die A-Matrix des Bewertungsklassifikators aus STORE2 liest. Diese Matrix enthält soviele A-Vektoren, wie der Bewertungsklassifikator Klassen schätzt. MAT führt nach dem Einlesen für jeden A-Vektor ein Skalarprodukt mit dem X-Vektor aus Die Skalarprodukte werden in der Reihenfolge der A-Vektoren in den D-Vektor eingebunden. Diesen schreibt MAT in STORE1.

Nach Ablauf dieser Schleife liegt in STORE1 als Ergebnis der D-Vektor parat, der zu jeder der *K* Klassen des Entscheidungsproblems eine Schätzung im Zahlenintervall [0,1] enthält. Es ist nun Sache eines Nachverarbeitungsmoduls, ob es die zur maximalen Schätzung korrespondierende Bewertung des Klassifikators akzeptiert oder rejektiert. Eine Unterstützung der Nachverarbeitung durch die Klassifikation ist dadurch gewährleistet, daß aus der Adaptionsphase das kontinuierliche Schätzvektorspektrum des Bewertungsklassifikators bekannt ist, aus dem sich bei Anwendung eines Kostenmodells statistisch abgesicherte Schwellen zum Rejektieren bzw. Akzeptieren einer Schätzung ableiten lassen. Wird ferner die Schätzvektorstatistik im Lesebetrieb in Zyklen erfaßt, lassen sich statistische Prognosen über eine dynamische Nachjustierung von Schwellen ableiten.

• Anwendung auf allgemeine alphanumerische Erkennung :

Bei der Erkennung eines allgemeinen Klassensatzes, der aus 10 Ziffern, 30 Grossbuchstaben, 30 Kleinbuchstaben und 20 Sonderzeichen besteht, sind insgesamt mindestens 90 Klassen zu diskriminieren. Diesen 90 Klassen entsprächen nun 4005 Paarklassifikatoren, wollte man das Erkennungsproblem mit einem vollständigen Netzklassifikator lösen. Sowohl Speicherkapazität als auch Rechenkapazität von herkömmlichen Leseelektroniken wären damit überladen. Das Problem veschärft sich noch, wenn anstatt der 90 Bedeutungsklassen aus erkennungstheoretischen Gründen sogenannte Gestaltklassen eingeführt werden, die die jeweils typischen Schreibformen derselben Zeichenklasse repräsentieren. Auf Basis der Gestaltklassen sind dann bis zu 200 Klassen zu trennen.

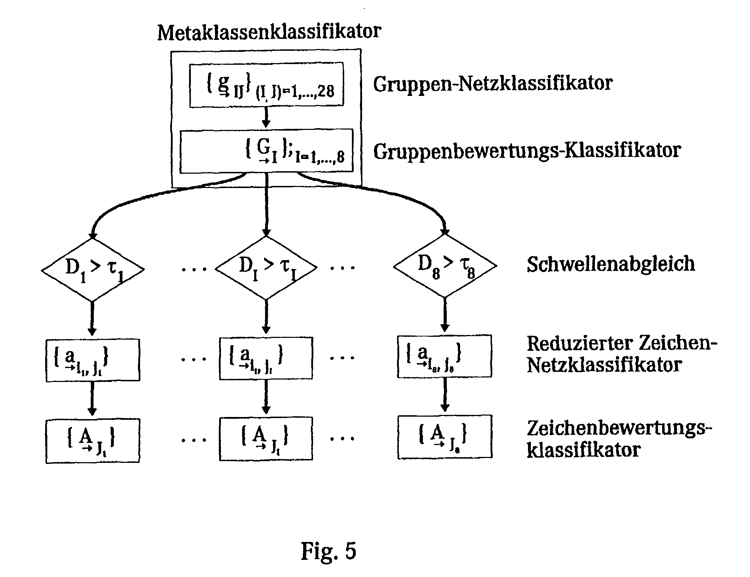

Dieses Problem wird gelöst, indem ein Metaklassenklassifikator, bestehend aus einem Gruppen-Netzklassifikator und einem Gruppenbewertungs-Klassifikator, trainiert wird. Das entstehende Klassifikationssytem ist in Fig.5 einzusehen. Der Metaklassen-Klassifikator erkennt dabei Gruppen von Zeichen. Das Clustern zu Gruppen wird über eine Metrik ausgeführt, die auf Basis der Momentenmatrizen der einzelnen Gestaltklassen errechnet wird. Dabei werden die Gruppen so strukturiert, daß zueinander ähnliche Gestaltklassen in derselben Gruppe liegen. Die Momentenmatrix einer Gruppe entsteht dabei durch gewogene Mittelung über all die Momentenmatrizen der in der Gruppe repräsentierten Gestaltklassen. Bei beispielsweise 8 Gruppen, die je höchstens 30 Gestaltklassen umfassen , wird der Metaklassen-Klassifikator selbst als Kopplung eines Netzklassifikators mit einem erfindungsgemäß erzeugten Bewertungsklassifikator realisiert. Zu jedem Gruppenpaar entsteht demnach ein Paarklassifikator. Der Gruppen-Netzkiassifikator basiert dann auf 28 Paarklassifikatoren $\vec{g}_{I,J}$. Auf diesen wird ein Gruppenbewertungs-Klassifikator $\vec{G}_I$ trainiert, der in die 8 Gruppen als Klassen schätzt. Im nächsten Schritt wird zu jeder Gruppe von Gestaltklassen ein reduziertes Set von Paarklassifikatoren $\vec{\alpha}_{ii,jI}$ mit entsprechendem Bewertungsklassifikator $\vec{A}_{JI}$ nach der beschriebenen Methode trainiert. In der Lesephase entscheidet nun zuerst der Gruppenbewertungs-Klassifikator, zu welcher Gruppe das betrachtete Zeichen gehört. Anschliessend wird der Reduzierte Zeichen-Netzklassifikator schwellenabhängig aktiviert, der zu der oder den entschiedenen Gruppen korrespondiert. Dieser erzeugt zu jeder in der Gruppe vertretenen Gestaltklasse einen Schätzwert. Es werden auf statistischer Grundlage für jede Gruppe Schwellen $\tau_I$ justiert, die regeln , ab welcher Schätzgüte $D_I$ des Gruppenbewertungs-Klassifikators der entsprechende Reduzierte Zeichen-Netzklassi-fikator $\vec{\alpha}_{ii,jI}$ zu aktivieren ist. Die Schwellen können so eingestellt werden, daß mit möglichst geringem Rechenaufwand immer mindestens einer der Reduzierten Zeichen-Netzklassifikatoren mit hoher Sicherheit das richtige Erkennungsergebnis aufweist. Liegen Ergebnisse von mehreren Zeichenbewertungs-Klassifikatoren vor, so ensteht ein normiertes Gesamtresultat dadurch, daß alle Schätzungen eines aktivierten Zeichenbewertungs-Klassifikators $\vec{A}_{JI}$ mit der Schätzung des entsprechenden Gruppenbewertungs-Klassifikators $\vec{G}_I$ multipliziert werden, während die Schätzwerte von nicht aktivierten Zeichen-Netzklassifikatoren vor Multiplikation mit der Gruppenschätzung mit 1/*Anzahl Klassen* vorbelegt werden. Mit diesem Klassifikationsansatz ist es möglich, allgemeine alphanumerische Erkennungsaufgaben ganz auf der Basis des erfindungsgemäßen Verfahrens auszuführen.

Weitere Lösungsmöglichkeiten bestehen in folgendem:

1. Ausdehnung auf Multiklassenentscheider als Basisklassifikatoren

Die Methode ist prinzipiell nicht beschränkt auf die Adaption des Bewertungsklassifikators über ein Ensemble von Zwei-Klassenentscheidern, sondern ist auf Ensembles von Multi-Klassenentscheidern ausdehnbar. So kann bei einem Ensemble aus n-Klassen-Entscheidern, die n-te Klasse jeweils die Komplementklasse zu den übrigen n-1 Klassen desselben Entscheiders in Bezug auf alle vorhandenen Klassen darstellen.

2. Kaskadierende Systeme mit erfindungsgemäßen Klassifikatoren:

Die Praxis des automatischen Lesebetriebs zeigt, daß bei konstanter Leseleistung eine beträchtliche Aufwandsreduktion möglich ist, indem eine Kontrollstruktur die höher strukturierten Erkennungsmodule nur dann aufruft, wenn bereits ein schwächer strukturiertes Modul für ein vorliegendes Muster eine zu geringe Schätzgüte erzielt hat. Die erfindungsgemäßen Klassifikatoren ordnen sich in diese Strategie nahtlos ein. Es wird ein System der erfindungsgemäßen Klassifikatoren aufgebaut, das aufbauend auf ein und demselben Basisklassifikator kaskadierend klassifizert. Dabei wird der (n+1)-te Bewertungsklassifikator mit den Mustern trainiert, die der n-te Bewertungsklassifikator mit zu geringer Güte geschätzt hat. Im praktischen Lesebetrieb bricht diese Kaskade im allgemeinen bereits nach dem ersten Bewertungsklassifikator ab, wird aber für seltene und schwierige Muster fortgesetzt und erhöht damit die Leserate bei geringer Rechenlaststeigerung.

**Patentansprüche**

1. Verfahren zur Mustererkennung auf statistischer Basis, das für ein zu erkennendes Objekt auf Basis eines vollständigen Ensembles von Zwei- oder Mehrklassenklassifikatoren die Zugehörigkeit zu jeder Zielklasse des Klassensatzes mit einem numerischen Wert schätzt, der sich durch kaskadierte Anwendung von Polynomklassifikatoren ergibt, **dadurch gekennzeichnet,**

   **daß** aus allen Zwei- oder Mehrklassenklassifikatoren über deren Schätzvektorspektrum auf einer Lernstichprobe, in der alle zu erkennenden Klassenmuster genügend stark vertreten sind, eine Auswahl von denjenigen Zwei- oder Mehrklassenklassifikatoren erfolgt, deren Schätzungen am stärksten zur Minimierung eines über das Schätzvektorspektrum errechneten skalaren Maßes mit hoher Trennrelevanz beitragen,
   **daß** mittels der ausgewählten Zwei- oder Mehrklassenklassifikatoren über eine erweiterte Lernstichprobe Schätzvektoren gebildet werden, aus denen durch polynomiale Verknüpfung expandierte Merkmalsvektoren erzeugt werden, auf deren Basis ein Bewertungsklassifikator zur Schätzung auf alle Zielklassen berechnet wird.

2. Verfahren nach Anspruch 1, **dadurch gekennzeichnet,**
   **daß** als skalares Trennmaß die Summe der Fehlerquadrate im Entscheidungsraum gewählt wird.

3. Verfahren nach Anspruch 1, **dadurch gekennzeichnet,**
   **daß** als skalares Trennmaß die Entropie im Verteilungsraum gewählt wird, wobei die Auftretenshäufigkeit jedes Merkmalszustandes der Zwei- oder Mehrklassenklassifikatorschätzungen über die Menge aller Merkmalszustände zu ermitteln ist.

4. Verfahren nach Anspruch 1-3, **dadurch gekennzeichnet,**
   **daß** eine größere Zielklassenmenge in mehrere Zielklassenmengen aufgeteilt wird, für die dann jeweils eine Auswahl der Zwei- oder Mehrklassenklassifikatoren und daraus der Bewertungsklassifikator erzeugt wird, und daß aus den Ergebnissen der Bewertungsklassifikatoren eine resultierende Gesamtschätzung ermittelt wird.

5. Verfahren nach Anspruch 4, **dadurch gekennzeichnet,**
   **daß** aus den Ergebnisvektoren der Bewertungsklassifikatoren ein kartesisch erweiterter Produktvektor gebildet wird, aus dem dann ein die Gesamtschätzung ermittelnder resultierender quadratischer Bewertungsklassifikator gebildet wird.

6. Mustererkennungsverfahren nach Anspruch 4, **dadurch gekennzeichnet,**
   **daß** aus den Ergebnisvektoren der Bewertungsklassifikatoren ein kartesisch erweiterter Produktvektor gebildet wird, der mittels einer Unterraumtransformation in einen transformierten Vektor überführt wird, von dem nur die wichtigsten Komponenten entsprechend der Eigenwertverteilung der Transformationsmatrix zur Adaption eines quadratischen Klassifikators verwendet werden, der dann den transformierten und reduzierten Vektor zu einem Schätzvektor auf Zielklassen abbildet.

7. Verfahren nach Anspruch 4, **dadurch gekennzeichnet,**
   **daß** vor Aktivierung der jeweiligen Auswahl der Zwei- oder Mehrklassenklassifikatoren ein Metaklassenklassifikator, der über Gruppen von Klassenmengen trainiert wird, Schätzungen über die Gruppen erzeugt, daß danach diejenigen Zwei- oder Mehrklassenklassifikatoren für die Zeichen der Gruppen, deren Schätzwert über einer festgelegten Schwelle liegt, aktiviert werden und daß dann zur Ermittlung der Gesamtschätzung die Gruppenschätzungen mit den Schätzungen der jeweils zugehörigen Zeichenbewertungs-Klassifikatoren für die in der jeweiligen Gruppe enthaltenen Zeichenklassen nach einer einheitlichen Regel so verknüpft werden, daß die Summe über alle so verknüpften Zeichenschätzungen eine auf 1 normierbare Zahl ergibt.

8. Anordnung zur Mustererkennung auf statistischer Basis, die für ein zu erkennendes Objekt auf Basis eines vollständigen Ensembles von Zwei- oder Mehrklassenklassifikatoren die Zugehörigkeit zu jeder Zielklasse des Klassensatzes mit einem numerischen Wert schätzt, der sich durch kaskadierte Anwendung von Polynom klassifikatoren ergibt,

**gekennzeichnet durch**

- Mittel zur statistisch optimierten Auswahl aus einem vollständigen Ensemble aller Zwei- oder Mehrklassenklassifikatoren auf Basis ihres Schätzvektorspektrums über einer Lernstichprobe, in der alle zu erkennenden Klassenmuster genügend stark vertreten sind, von denjenigen Zwei- oder Mehrklassenklassifikatoren, deren Schätzungen am stärksten zur Minimierung eines über das Schätzvektorspektrum errechneten skalaren Maßes mit hoher Trennrelevanz beitragen,
- Mittel zur Erzeugung von polynomial expandierten Merkmalsvektoren, die die Ordnung des Systems der ausgewählten Zwei- oder Mehrklassenklassifikatoren repräsentieren und die über eine erweiterte Lernstichprobe gebildet werden,
- Mittel zur Berechnung eines Bewertungsklassifikators, welcher aus den **durch** polynomiale Verknüpfung expandierten Merkmalsvektoren des Systems der ausgewählten Zwei- oder Mehrklassenklassifikatoren einen Schätzvektor errechnet, welcher zu jeder Zielklasse einen numerischen Wert als approximierte Rückschlußwahrscheinlichkeit der Zugehörigkeit des klassifizierten Musters zu eben jener Klasse von Mustern enthält.

**Claims**

1. Method for pattern recognition on a statistical basis, which uses a numerical value to assess the association with each target class of the class set for an object to be recognized, on the basis of a complete ensemble of two-class or multi-class classifiers, which numerical value is obtained by cascaded use of polynomial classifiers, **characterized**

   **in that** selection is made from all the two-class or multi-class classifiers, via their estimation vector spectrum on a learning sample in which all the class patterns to be recognized are represented sufficiently strongly of those two-class or multi-class classifiers whose estimations contribute to the greatest extent to minimizing a scalar measure, which is calculated across the estimation vector spectrum, with high separation relevance, and **in that** the selected two-class or multi-class classifiers are used to form estimation vectors over an enlarged learning sample, from which vectors polynomial linking is used to produce expanded feature vectors, on whose basis an assessment classifier is calculated for estimation of all the target classes.

2. Method according to Claim 1, **characterized**
   **in that** the sum of the squares of the errors in decision space is chosen as the scalar separation measure.

3. Method according to Claim 1, **characterized**
   **in that** the entropy in distribution space is chosen as the scalar separation measure, in which case the probability of occurrence of each feature state in the two-class or multi-class classifier estimates can be determined across the set of all feature states.

4. Method according to Claims 1-3, **characterized**
   **in that** a larger target class set is split into a number of target class sets for each of which a selection of the two-class or multi-class classifiers and, from this, of the assessment classifiers is produced, and in that a resultant overall estimate is determined from the results of the assessment classifiers.

5. Method according to Claim 4, **characterized**
   **in that** a product vector which is expanded in cartesian form is formed from the result vectors of the assessment classifiers and is then used to form a resultant square assessment classifier which determines the overall estimate.

6. Pattern recognition method according to Claim 4, **characterized**
   **in that** a product vector which is expanded in cartesian form is formed from the result vectors of the assessment classifiers and is transferred by means of a sub-space transformation to a transformed vector, of which only the most important components are used in accordance with the eigenvalue distribution of the transformation matrix for adaptation of a square classifier, which then maps the transformed and reduced vector onto target classes to form an estimated vector.

7. Method according to Claim 4, **characterized**
   **in that**, before activation of the respective selection of the two-class or multi-class classifiers, a meta-class classifier, which is trained using groups of class sets, produces estimates over the groups, in that, after this, those two-class or multi-class classifiers are activated for the characters in the groups whose estimated value is above a defined threshold, and in that, in order to determine the overall estimate, the group estimates are then linked with the estimates of the respectively associated character assessment classifiers for the character classes contained in the respective group using a standard rule, such that the sum of all the character estimates linked in this way results in a number which can be normalized with respect to unity.

**8.** Arrangement for pattern recognition on a statistical basis, which uses a numerical value to assess the association with each target class of the class set for an object to be recognized, on the basis of a complete ensemble of two-class or multi-class classifiers, which numerical value is obtained by cascaded use of polynomial classifiers, **characterized by**

- means for statistically optimized selection from a complete ensemble of all the two-class or multi-class classifiers on the basis of their estimation vector spectrum over a learning sample in which all the class patterns to be recognized are represented sufficiently strongly, of those two-class or multi-class classifiers whose estimates contribute most strongly to minimizing a scalar measure, which is calculated across the estimation vector spectrum, with high separation relevance, and
- means for producing polynomially expanded feature vectors, which represent the order of the system of the selected two-class or multi-class classifiers and which are formed over an expanded learning sample,
- means for calculating an assessment classifier, which calculates an estimation vector from the feature vectors (expanded by polynomial linking) of the system of the selected two-class or multi-class classifiers, which estimation vector contains a numerical value for each target class as an approximated conclusion probability of the association of the classified pattern with just that class of patterns.

## Revendications

**1.** Procédé pour la reconnaissance de formes sur une base statistique, lequel procédé estime pour un objet à reconnaître sur la base d'un ensemble complet de classificateurs à deux ou plusieurs classes l'appartenance à chaque classe visée de l'ensemble de classes avec une valeur numérique qui résulte de l'utilisation en cascade de classificateurs polynomiaux, **caractérisé par le fait que**

parmi tous les classificateurs à deux ou plusieurs classes, on effectue sur leur spectre de vecteurs estimés pour un échantillon d'apprentissage dans lequel toutes les formes à reconnaître sont suffisamment représentées une sélection des classificateurs à deux ou plusieurs classes dont les estimations contribuent le plus à la minimisation d'une mesure scalaire, calculée sur le spectre de vecteurs estimés, d'une grande pertinence de séparation,
au moyen des classificateurs à deux ou plusieurs classes sélectionnés, on forme sur un échantillon d'apprentissage étendu des vecteurs estimés à partir desquels on produit des vecteurs caractéristiques étendus par combinaison polynomiale sur la base desquels on calcule un classificateur d'évaluation pour l'estimation sur toutes les classes visées.

**2.** Procédé selon la revendication 1, **caractérisé par le fait qu'**on choisit comme mesure de séparation scalaire la somme des carrés d'erreurs dans l'espace de décision.

**3.** Procédé selon la revendication 1, **caractérisé par le fait qu'**on choisit comme mesure de séparation scalaire l'entropie dans l'espace de distribution, la fréquence d'apparition de chaque état de caractéristique des estimations de classificateurs à deux ou plusieurs classes sur l'ensemble de tous les états de caractéristiques étant à déterminer.

**4.** Procédé selon la revendication 1 à 3, **caractérisé par le fait qu'**on divise un plus grand ensemble de classes visées en plusieurs ensembles de classes visées pour lesquels on produit ensuite à chaque fois une sélection des classificateurs à deux ou plusieurs classes et, à partir de là, le classificateur d'évaluation et qu'on détermine à partir des résultats des classificateurs d'évaluation une estimation globale résultante.

**5.** Procédé selon la revendication 4, **caractérisé par le fait qu'**on forme à partir des vecteurs de résultats des classificateurs d'évaluation un vecteur de produit à extension cartésienne à partir duquel on forme ensuite un classificateur d'évaluation quadratique résultant déterminant l'estimation globale.

**6.** Procédé de reconnaissance de formes selon la revendication 4, **caractérisé par le fait qu'**on forme à partir des vecteurs de résultats des classificateurs d'évaluation un vecteur de produit à extension cartésienne qui est transféré au moyen d'une transformation de sous-espace dans un vecteur transformé dont seules les composantes les plus importantes selon la distribution de valeurs propres de la matrice de transformation sont utilisées pour l'adaptation d'un classificateur quadratique qui projette ensuite le vecteur transformé et le réduit en un vecteur estimé sur des classes visées.

**7.** Procédé selon la revendication 4, **caractérisé par le fait que**, avant l'activation de la sélection respective des classificateurs à deux ou plusieurs classes, un classificateur de métaclasses dont l'apprentissage est effectué sur des groupes d'ensembles de classes produit des estimations sur les groupes, qu'on active ensuite les classificateurs à deux ou plusieurs classes pour les symboles des groupes dont la valeur estimée est supérieure à un seuil fixé et qu'on combine ensuite pour la détermination de l'estimation globale les estimations de groupes avec les estimations des classificateurs d'évaluation de symboles respectivement associés pour les classes de symboles contenus dans le groupe respectif selon une règle uniforme de telle sorte que la somme sur toutes les estimations de symboles ainsi combinées donne un nombre pouvant être normé à 1.

**8.** Dispositif pour la reconnaissance de formes sur une base statistique, lequel dispositif estime pour un objet à reconnaître sur la base d'un ensemble complet de classificateurs à deux ou plusieurs classes l'appartenance à chaque classe visée de l'ensemble de classes avec une valeur numérique qui résulte de l'utilisation en cascade de classificateurs polynomiaux, **caractérisé par**

- des moyens pour sélectionner selon une optimisation statistique parmi un ensemble complet de tous les classificateurs à deux ou plusieurs classes sur la base de leur spectre de vecteurs estimés pour un échantillon d'apprentissage dans lequel toutes les formes de classes à reconnaître sont suffisamment représentées les classificateurs à deux ou plusieurs classes dont les estimations contribuent le plus à la minimisation d'une mesure scalaire, calculée sur le spectre de vecteurs estimés, d'une grande pertinence de séparation,
- des moyens pour produire des vecteurs caractéristiques à extension polynomiale qui représentent l'ordre du système des classificateurs à deux ou plusieurs classes sélectionnés et qui sont formés sur un échantillon d'apprentissage étendu,
- des moyens pour calculer un classificateur d'évaluation qui calcule à partir des vecteurs caractéristiques, étendus par combinaison polynomiale, du système des classificateurs à deux ou plusieurs classes sélectionnés un vecteur estimé qui contient pour chaque classe visée une valeur numérique comme probabilité de conclusion approchée de l'appartenance de la forme classée à la classe respective de formes.

EP 0 978 088 B1

Prozeßschritte

Binärbilder

$\{\underline{u}\}$; $u_i = 0,1$

Normierung

Graubilder

$\{\underline{v}\}$; $v_i \in [0,255]$

Hauptachsentransformation
$\underline{w} = \underline{\underline{B}} \cdot \underline{v}$

Transf. Merkmale

$\{\underline{w}\}$

$\left.\right\}$ Normierung

Polynomexpansion

exp. Merkmale

$\{\underline{x}\}$; $\underline{x} = \underline{w}\ \underline{w}^T$

Momentenmatrixberechnung
für alle
Klassenpaare

empir.
Momentenmatrizen

$\{\underline{\underline{M}}_{ij}\}$; $\underline{\underline{M}}_{ij} = \overline{\underline{x}_i \underline{x}_i^T + \underline{x}_j \underline{x}_j^T}$

$\left.\right\}$ Statistische
Momentenberechnung

Regression

Set der Paarklassifikatoren

$\{\underline{\underline{A}}_{ij}\}$; $\underline{\underline{A}}_{ij} = (\underline{\underline{M}}_{ij})^{-1} \overline{\underline{x}}_{(i)} p_{(i)}$

$\left.\right\}$ Erzeugung der
Paarklassifikatoren

Fig. 1

Set der Paarklassifikatoren $\{ \vec{A}_{ij} \}$

Klassifikation

Lernstichprobe $\{ \vec{w} \}$

Spektrum der Paarklassifikatoren $\{ \vec{d}_l \}; d_l = \vec{A}_{ij} \odot \vec{\chi}(w)$

Wahl eines Trennmaßes

Minimaler quadrat. Restfehler $\delta S^2 = 0$

$H \rightarrow Min$ Minimale Entropie

Reduziertes Set der Paarklassifikatoren $\{ \vec{A}_{k\alpha} |_\alpha \}_{\alpha=1,...75}$

Reduziertes Set der Paarklassifikatoren $\{ \vec{A}_{l\beta} |_\beta \}_{\beta=1,...75}$

Abhängigkeits-relationen $S^2(\vec{A}_{ij})$ $H(\vec{A}_{ij})$

Fig. 2

EP 0 978 088 B1

RNK

$\{ \underrightarrow{A}_{i\alpha\,j\alpha} \}$

erweiterte Lernstichprobe

$\{ \underrightarrow{w} \}$

Klassifikation

$d_{i\alpha\,j\alpha} = \underrightarrow{A}_{i\alpha\,j\alpha} \odot \underrightarrow{X}(\underrightarrow{w})$

Spektrum des RNK

$\{ d_{i\alpha\,j\alpha} \}$

Polynomexpansion

$\underrightarrow{x}(\underrightarrow{d}) = \underrightarrow{d}\,\underrightarrow{d}^{T}$

Momentenberechnung

$\underrightarrow{M}_{(l)} = \underrightarrow{x}_{(l)}\,\underrightarrow{x}^{T}_{(l)}$ ; $\underrightarrow{M} = \overline{\underrightarrow{M}}_{(l)}$

Gesamt-momentenmatrix

$\underrightarrow{M} = \overline{\underrightarrow{M}}_{(l)}$

Regression

$\underrightarrow{A}_{l} = \underrightarrow{M}^{-1}\,\overline{\underrightarrow{x}}_{(l)}\,P(l)$

Bewertungsklassifikator

$\{ \underrightarrow{A}_{l} \}$

Fig. 3

**Fig. 4**

STORE 1 (dynamic)

STORE 2 (static)

ALGO

$u$
READ

NORM

$v$
WRITE
READ

MAT : $w = B\,v$

$w$
WRITE
READ

POLY: $X = w\,w^T$

$X(w)$
WRITE
READ

MAT: $d_\alpha = A_{|\alpha|\alpha} \odot X$

$d(X)$
WRITE
READ

POLY: $X = d\,d^T$

$X(d)$
WRITE
READ

MAT: $D_J = A_J \odot X$

$D(X)$
WRITE

Transformationsmatrix

$B$
READ

Polynom-steuerliste PSL1
READ

RNK-Matrizen

$\{A_{\kappa|\alpha}\}$
READ

Polynom-steuerliste PSL2
READ

Bewertungsklassifikator

$\{A_J\}$
READ

Datenfluß

Kontrollfluß

EP 0 978 088 B1

18

EP 0 978 088 B1

Metaklassenklassifikator

$\{\underset{g}{g}_{IJ}\}_{(I,J)=1,\dots,28}$    Gruppen-Netzklassifikator

$\{\underset{\to I}{G}\}_{I=1,\dots,8}$    Gruppenbewertungs-Klassifikator

$D_1 > \tau_1$ ... $D_I > \tau_I$ ... $D_8 > \tau_8$    Schwellenabgleich

$\{\underset{\to I_1, J_1}{a}\}$ ... $\{\underset{\to I_1, J_1}{a}\}$ ... $\{\underset{\to I_8, J_8}{a}\}$    Reduzierter Zeichen-Netzklassifikator

$\{\underset{\to J_1}{A}\}$ ... $\{\underset{\to J_I}{A}\}$ ... $\{\underset{\to J_8}{A}\}$    Zeichenbewertungs-klassifikator

Fig. 5